# EUROPEAN PATENT APPLICATION

(11) **EP 1 761 013 A1**
(43) Date of publication of application: **07.03.2007**
(21) Application number: 06741798.0
(22) Date of filing: 08.05.2006
(51) Int. Cl.: H04M 3/30

(54) **A BROADBAND DEVICE OF THE CENTRAL OFFICE END CAPABLE OF SELF-DETECTING AND A DETECTING METHOD THEREOF**

(30) Priority: 25.05.2005 CN 200510034699
(71) Applicant: Huawei Technologies Co., Ltd., Longgang District Shenzhen Guangdong 518129 (CN)
(72) Inventor: HAO, Xiuli, Huawei Administration Building, Shenzhen, Guangdong 518129 (CN)
(74) Representative: Epping - Hermann - Fischer
(86) International application number: PCT/CN2006/000903
(87) International publication number: WO 2006/125368

(57) **Abstract**

A broadband device of the central office end capable of self-detecting and a method for detecting the XDSL port, set at least one switch matrix control switch set to connect each CO port of the XDSL to the peripheral line of the remote user's MODEM by the switch matrix of the control switch set; the control switch set receive the control command from the control system inside the device, then disconnect any port of the CO XDSL port according to the control demand, and exchange the connected peripheral lines of any two ports among the CO XDSL ports. Disconnect any two ports of the CO XDSL ports by control switch, or exchange the connected peripheral lines of any two ports among the CO XDSL ports. Therefore, when a faulty CO port is checked out, it can be replaced by the normal port inside the un-faulty device so as to detect the initial CPE peripherally connected the faulty port, thus it can be decided whether the faulty port is caused by the port itself or by the user end. The device and method can rapidly locate and judge the port fault without additional private testing system, therefore reduces the cost.

## Description

### FIELD OF THE INVENTION

The present invention relates to the field of communication technology, and in particular to a method of center office wideband device correlation detection.

### BACKGROUND OF THE INVENTION

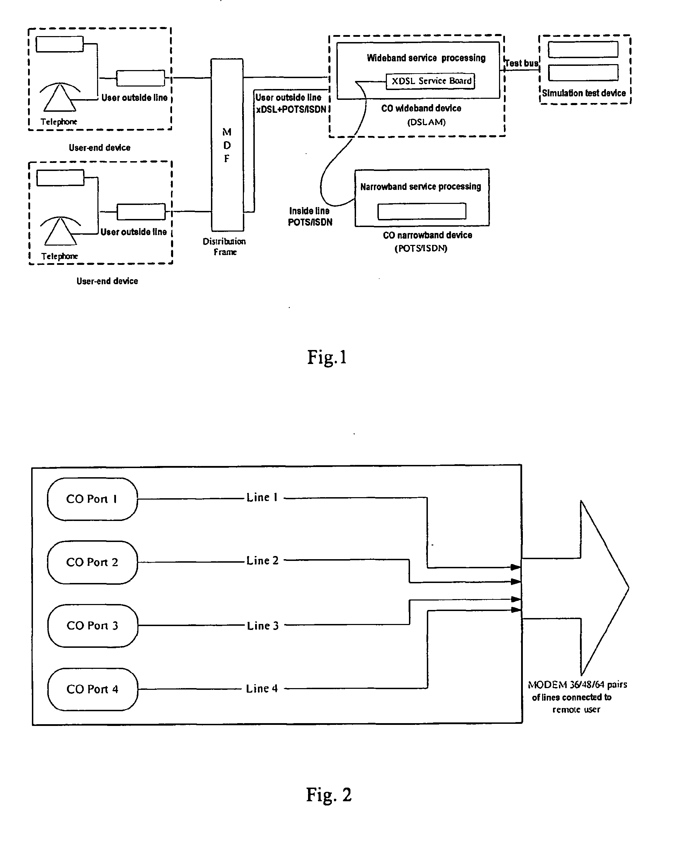

With the rapid popularization of network technologies and the fast development of multimedia technologies, the user's demand on the bandwidth becomes increasingly higher. The Digital Subscriber Line (DSL) technology has stepped into a stage of high-speed development since the year of 2003, and the number of users of Asymmetric Digital Subscriber Line (ADSL) and Very-High-Data-Rate Digital Subscriber Line (VDSL) are increasing rapidly. Meanwhile, the test and maintenance of the wideband network has become a headache to its operator. Particularly, the wideband network is more complicated and involves more technical intervention in comparison with the conventional narrowband telecommunication network, and therefore the detection and maintenance has become a global problem and seriously restricted the development of the wideband network. Currently, all systems in the market used for the simulation test of the wideband network are individual box-like test devices as shown in Fig. 1. It is required that when the Digital Subscriber Line Access Multiplex (DSLAM) catches a line (disconnects the user inner and outside lines of the DSLAM, and connects the inner line and the outside line to a test bus respectively), the test line is subject to the test by the test device. The test device transmits an ADSL test signal to the caught test line through a simulation module, then analyzes the data obtained from the test so as to get a final result, and processes the test result in the following two ways:
1. The test result is passed to a console for display and analysis, and therefore a computer with special software installed is required for the test control, and a person shall be dispatched for the test to the place where the device is located.
2. The data obtained from the test are transmitted through a network interface to a remote terminal where the data are analyzed and processed, and therefore a computer installed with special software is required for the test control and the display, and an independent public network IP address is also required.
   The following problems arise accordingly.
   1) Thus a special test device has to be added, resulting in the increased cost and difficulty for the networking.
   2) Current test devices are rather expensive, and particularly, a country region can hardly afford such expensive test systems.
   3) The detection through a test device needs special software and computer to process and display a test result or supports a remote test, which requires that a public network IP address shall be assigned to the test device, and thus occupies related resources. Moreover, the maintenance workload is so large due to thousand of failure reports from DSL users that it is difficult to deal with the reports duly and the operation cost is high.
   4) Only ADSL ports can be tested, but VDSL ports cannot be tested, otherwise an additional VDSL test device shall be added.
   5) And the test operations are complicated.

### SUMMARY OF THE INVENTION

An embodiment of the present invention provides a center office wideband device with a self-detection function and a method thereof that can locate and judge quickly a port failure by means of the center office wideband device without any additional special test device, thus reducing the operation and maintenance cost of the operator.

The center office wideband device with a self-detection function may comprise a plurality of XDSL center office ports, where at least one control switch group may be provided, and the XDSL center office ports are connected through the control switch group to outside lines with which remote user devices are connected.

The control switch group connects or disconnects one or more of the XDSL center office ports based upon a control signal transmitted from the center office wideband device, so as to exchange the outside lines with which two of the XDSL center office ports are connected.

Optionally, the control switch group may be a relay group or an analog switch group.

Optionally, the XDSL center office ports may be ADSL center office ports or VDSL center office ports.

The detecting method using the above center office wideband may comprise the steps of:
searching for a corresponding relationship between a failed-line line number and a center office port based upon the
failed-line number contained in failure information reported from a user to determine a specific port position of a failed line in the center office wideband device;
searching and determining a normal port at which there is no service stream at present; and
controlling the control switch group connected between the center office ports and the outside lines to be opened or closed based upon a control signal within the center office wideband device, replacing the failed port with the normal port, testing a custom position equipment with which the failed port is originally connected, and thus determining whether the failure results from the port itself or the user side.

Optionally, the step of controlling the control switch group connected between the center office ports and the outside lines to be opened or closed based upon a control signal within the center office wideband device and replacing the failed port with the normal port may comprise the steps of:
controlling the control switch group to disconnect the failed port and the outside line with which the custom position equipment is connected;
connecting the normal port to the outside line; and
transmitting an activation command by the center office wideband device to activate, with the normal port, the custom position equipment with which the failed port is originally connected.

Optionally, in the case the normal port, after being connected to the outside line, is capable to activate the custom position equipment with which the failed port is originally connected, determining that the failure results from the failed port itself; otherwise, determining that the failure results from a line or user-side failure.

Since the embodiments of the present invention have improved the existing center office wideband device, and the improved center office wideband device can locate and judge quickly a port failure without any additional special test device, therefore the resources can be saved, and the cost of the networking and operation can be reduced greatly. Moreover, since the operating person can operate the device at the center office or remotely without the need of being dispatched to the place where the device is located, therefore the time and labor can be saved, and the network maintenance cost can be reduced. Also, the center office wideband device itself is provided with both ADSL ports and VDSL ports, so it is possible to find either an operative ADSL port or an operative VDSL port so as to test the Custom Position Equipment (CPE) of the failed port.

### BRIEF DESCRIPTIONS OF THE DRAWINGS

Fig.1 is a schematic diagram of the networking of the conventional Central Office (CO) wideband device plus a test system;
Fig.2 is a schematic diagram of the connection of ADSL/VDSL CO ports in the conventional device and a user MODEM; and
Fig.3 is a schematic diagram of the connection of ADSL/VDSL CO ports in a device according to an embodiment of the present invention and a user MODEM.

### DETAILED DESCRIPTIONS OF THE EMBODIMENTS

In the following, embodiments of the present invention will be described in detail with reference to the drawings.

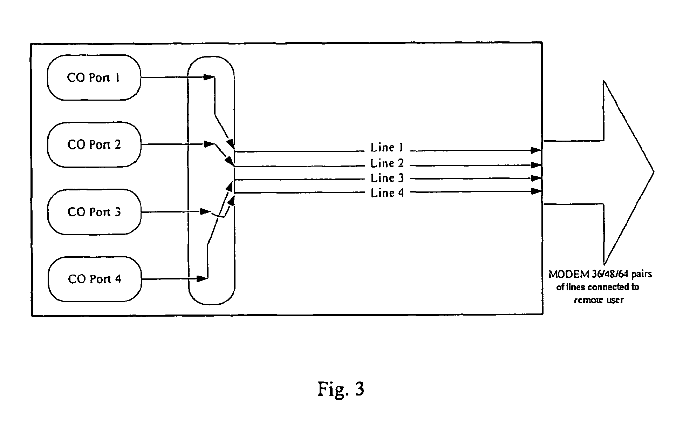

It is necessary to adapt the conventional center office (CO) wideband device into a device with a self-detection function according to the embodiment of the present invention. As shown in Fig. 2, each CO port in the conventional CO wideband device is connected to a remote user MODEM directly through an outside line, and the connection is one-to-one corresponding and fixed. That is, a CO port P1 can be connected only to a Modem with which an outside line of Line 1 is connected, and so on. Fig. 3 shows the adapted device which comprises several ADSL CO ports or several VDSL CO ports and at least one switch control group arranged between the CO ports and outside lines connected to remote user Modems. The respective ADSL/VDSL CO ports are connected to the outside lines through the control switch group, which may be a relay group or an analog switch group. Upon a control command provided by a control system within the device, the relay group or the analog switch group is operated to disconnect any of the ADSL/VDSL CO ports and exchange the outside lines with which any two of the ADSL CO ports are connected or exchange the outside lines with which any two of the VDSL CO ports are connected. For example, it is assumed both CO Port 1 and CO Port 2 as shown in Fig. 3 are ADSL ports, and CO Port 1 and CO Port 2 are respectively connected to Line 1 and Line 2 via the relay group. When the control system within the device transmits the control command to the relay group, CO Port 1 is disconnected from Line 1, CO Port 2 is disconnected Line 2, and CO Port 1 is connected to Line 2, and CO Port 2 is connected to Line 1.

The adapted CO broadband device can thus detect a failure phenomenon of its own port, locate the failure and determine a specific reason for the failure. The detecting and locating method according to an embodiment of the present invention may be such a procedure that comprises the following essential steps.
A. Based upon a failed-line number contained in failure information reported from the user, the procedure searches for a corresponding relationship between the line number and the CO port, and determines a specific port position of the failed line in the CO wideband device, where the port is called the failed port. The reason for the failure can be a failure at the port itself or at the user side, and the failure at the user side comprises a line failure and a User Position Equipment (CPE) failure.
B. A maintenance person from the center office searches on the console to determine a normal port at which there is no service stream at present.
C. Upon a command from the control system within the device, the control switch group connected between the CO ports and the outside lines is operated for example to be opened or closed, the failed port is replaced with the determined normal port so as to test the CPE with which the failed port is originally connected, and thus it can be determined whether the failure results from the port itself or the user side. Further, Step C comprises the following steps.
   C1. The process controls the control switch group to disconnect the failed port and Line 1 with which the CPE is connected and to disconnect the normal port and Line 2 with which the CPE is connected.
   C2. The process connects the normal port to Line 1.
   C3. The control system within the device transmits an activation command to activate, with the normal port, the CPE with which the failed port is originally connected. If the normal port, after being connected to Line 1, is capable to activate the CPE with which the failed port is originally connected, then the failure may be due to the failed port itself. If the normal port, after being connected to Line 1, is still not capable to activate the CPE with which the failed port is originally connected, then the failure may be due to the line or the CPE.

In the XDML specifications of some telecommunication operators, it is required that a central office wideband device (DSLAM) shall be provided with the function of line catching, which thus guarantees the implementation of the present invention in terms of hardware.

In comparison with the prior art, the above embodiments of the present invention require no additional hardware device and simply make use of the ADSL/VDSL ports with which the device has been provided already. Particularly, the CPE of the failed port is connected to a known CO port through the control switch, and the normal CO port is used to activate the CPE with which the failed port is connected. For the port under test, the data can be obtained when the CPE under test is activated just as in a normal service routine. If the CPE with which the failure port is connected is activated successfully, then it can be substantially determined that the failure may be due to the port itself; otherwise, the failure may be more likely due to a line or CPE error.

Since the normal port may be found on the DSLAM device, it can be ensured that the tested port itself has nothing wrong.

A DSLAM network is located at edge devices and thus is mostly not placed in a central machine room. Particularly in a country region, the machine room is located in a harsh environment. Moreover, both dust particles in the north and humidity in the south may cause a short circuit of a single board resulting in a failure of a separate port. Therefore, the embodiments of the present invention can facilitate locating the problem of the port failure.

It can be seen from current statistics that once a XDSL service is started, in the case the failure reported from the user is not a line failure but a port failure or a CPE configuration failure, the embodiments of the present invention can rapidly locate the port failure or the user-side failure.

According to the embodiments of the present invention, not only the ADSL ports but also the VDSL ports can be detected. Since the CO wideband device itself is provided with both ADSL ports and VDSL ports, it is thus possible to find either an operative ADSL port or an operative VDSL port so as to test the CPE of the failed port.

Summarily, the embodiments of the present invention provide a solution, which can require no additional device cost and quickly locate a user failure as desired by the operators worldwide, and the advantages thus achieved and the significances thereof are remarkable accordingly.

It shall be appreciated that various changes or modifications can be made to the disclosed embodiments without departing from the scope of the present invention as defined by the accompanied claims.

## Claims

1. A center office wideband device with a self-detection function, with a plurality of XDSL center office ports, comprising at least one control switch group, and the XDSL center office ports are connected through the control switch group to outside lines with which remote user devices are connected; and the control switch group connects or disconnects one or more of the XDSL center office ports based upon a control signal transmitted from the center office wideband device, so as to exchange the outside lines with which two of the XDSL center office ports are connected.

2. The device according to claim 1, wherein the control switch group is a relay group or an analog switch group.

3. The device according to claim 1 or 2, wherein the XDSL center office ports are ADSL center office ports or VDSL center office ports.

4. A detecting method using a center office wideband device according to one of claims 1 to 3, comprising the steps of:
searching for a corresponding relationship between a failed-line number and a center office port based upon the failed-line number contained in failure information reported from a user to determine a specific port position of a failed line in the center office wideband device;
searching and determining a normal port at which there is no service stream at present; and
controlling the control switch group connected between the center office ports and the outside lines to be opened or closed based upon a control signal within the center office wideband device, replacing the failed port with the normal port, testing a custom position equipment with which the failed port is originally connected, and thus determining whether the failure results from the port itself or the user side.

5. The method according to claim 4, wherein the step of controlling the control switch group connected between the center office ports and the outside lines to be opened or closed based upon a control signal within the center office wideband device and replacing the failed port with the normal port comprising the steps of:
controlling the control switch group to disconnect the failed port and the outside line with which the custom position equipment is connected;
connecting the normal port to the outside line; and
transmitting an activation command by the center office wideband device to activate, with the normal port, the custom position equipment with which the failed port is originally connected.

6. The method according to claim 5, wherein in the case the normal port, after being connected to the outside line, is capable to activate the custom position equipment with which the failed port is originally connected, determining that the failure results from the failed port itself; otherwise, determining that the failure results from a line or user-side failure.
